# EUROPEAN PATENT SPECIFICATION

(11) **EP 1 878 947 B1**
(45) Date of publication and mention of the grant of the patent: **11.04.2012**
(21) Application number: 07013032.3
(22) Date of filing: 03.07.2007
(51) Int. Cl.: F16H 55/56, F16H 55/52

(54) **Belt type continuously variable transmission**
Kontinuierlich variable Übertragung über ein Band
Transmission variable continue par type courroie

(30) Priority: 12.07.2006 JP 2006191132
(43) Date of publication of application: 16.01.2008
(73) Proprietor: Yamaha Hatsudoki Kabushiki Kaisha, Iwata-shi, Shizuoka 438-8501 (JP)
(72) Inventor: Ishida, Yousuke c/o Yamaha Hatsudoki Kabushiki Kaisha, Iwata-shi Shizuoka-ken 438-8501 (JP); Oishi, Akifumi c/o Yamaha Hatsudoki Kabushiki Kaisha, Iwata-shi Shizuoka-ken 438-8501 (JP)
(74) Representative: Grünecker, Kinkeldey, Stockmair & Schwanhäusser

(56) References cited:
- EP-A1- 1 605 187
- EP-A2- 0 997 670
- EP-A2- 1 201 535
- DE-A1- 19 638 277
- DE-A1- 19 743 675
- JP-A- 2005 264 990
- JP-A- 2005 273 720
- US-A- 6 146 294
- US-A1- 2005 221 938

## Description

The present invention relates to a belt type continuously variable transmission according to the preamble of independent claim 1 and a straddle type vehicle having such a belt type continuously variable transmission according to claim 14.

Conventionally, straddle type vehicles having a belt type continuously variable transmission are known. A belt type continuously variable transmission has a primary sheave to which the driving force from an engine is transmitted and a secondary sheave to which the driving force is transmitted from the primary sheave via a V-belt. In such a belt type continuously variable transmission, a speed reduction ratio varies in accordance with respective changes of a winding radius of the belt in the primary sheave and a winding radius of the V-belt in the secondary sheave.

In the meantime, if the V-belt is made of rubber, the V-belt is likely to wear to reduce durability. Also, due to heat generation following deformation of the V-belt, there can be another problem such that the V-belt is likely to deteriorate. Therefore, an idea in which a resin block belt made of coupled multiple resin blocks is used as the belt type continuously variable transmission is proposed (See JP-A-2002-147553, for example).

In the belt type continuously variable transmission having the resin block belt, the belt itself hardly wear. However there arises, to the contrary, another problem such that surfaces of the sheaves are likely to wear. Thus, JP-A-2002-147553 (see Page 2, the right column, lines 34 to 38) proposes that the respective surfaces of the primary sheave and the secondary sheave are plated with chrome.

Another technology is described in the closest prior art document EP 1 605 187 A1 in which a CVT comprises sheaves with different materials.

The resin block belt has some extent of strength. However, it was revealed that, if the respective surfaces of the primary sheave and the secondary sheave are plated with chrome, wear of the resin block belt increases. As thus discussed, it was difficult, according to the conventional art, to highly compatibly ensure both of the prevention of wear of the V-belt and the prevention of wear of the sheaves.

The present invention is made under the circumstances, and an object of the present invention is to highly compatibly ensure both of prevention of wear of a V-belt and prevention of wear of sheaves.

This objective is solved in an inventive manner by a belt type continuously variable transmission comprising: a primary sheave to which a driving force from an engine is transmitted; a secondary sheave; and a V-belt wound around the primary sheave and the secondary sheave, the V-belt having a contact part contacting with the primary sheave and the secondary sheave, and at least a portion of the contact part being made of resin, wherein a surface hardness of a contact part of sheave halves of the secondary sheave contacting with the V-belt is lower than a surface hardness of a contact part of the primary sheave contacting with the V-belt.

Preferably, each of the primary sheave and the secondary sheave includes a sheave body made of a predetermined material, at least a surface of a contact part of the sheave body of the primary sheave contacting with the V-belt is coated with a plating material having a hardness higher than a hardness of its sheave body, and a surface of a contact part of the sheave body of the secondary sheave contacting with the V-belt is not coated with the plating material.

Further, preferably the plating material for the primary sheave is a plating material containing chrome as at least a part thereof.

Still further, preferably the material of the sheave body of the primary sheave is aluminum or an alloy containing aluminum.

Yet further still, preferably material of the sheave body of the secondary sheave is stainless steel.

According to a preferred embodiment, the surface hardness of the contact part of the secondary sheave is equal to or greater than 100Hv, in particular approximately 400 Hv.

Preferably, the surface hardness of the contact part of the primary sheave is approximately 1,000Hv.

Further, preferably a distance in which the V-belt moves in a radial direction of the secondary sheave in a first condition of the transmission, under which a speed reduction ratio is the maximum value, varies to a second condition of the transmission, under which the speed reduction ratio is the minimum value, is shorter than a distance in which the V-belt moves in a radial direction of the primary sheave.

Still further, preferably a distance between an axis of the primary sheave and an axis of the secondary sheave is not more than double the diameter of the secondary sheave.

Yet further still, preferably irregularities for retaining wear powder are formed into at least those parts of the sheave surfaces in contact with the V-belt.

Preferably, at least the contact part of the secondary sheave is machined by turning.

Further, preferably at least the contact part of the secondary sheave has a spiral groove or a plurality of coaxial circular grooves.

Still further, preferably a pitch between neighboring grooves is equal to or smaller than 0.1mm.

There is further provided a straddle type vehicle comprising the belt type continuously variable transmission according to one of the above embodiments.

Preferably, the straddle type vehicle further comprises a front wheel and a rear wheel, wherein both of the primary sheave and the secondary sheave are disposed between an axis of the front wheel and an axis of the rear wheel in a fore to aft direction of the vehicle.

In the following, the present invention is explained in greater detail with respect to several embodiments thereof in conjunction with the accompanying drawings, wherein:
- FIG. 1: is a side elevational view of a motorcycle according to an embodiment,
- FIG. 2: is a top plan view, showing relationships among positions of a vehicle frame, a leg shield, an engine unit and so forth,
- FIG. 3: is a right elevational view of the engine unit,
- FIG. 4: is a left elevational view of the engine unit,
- FIG. 5: is a cross sectional view, showing a mount condition of the engine unit,
- FIG. 6: is a cross sectional view, showing an internal structure of the engine unit,
- FIG. 7: is a cross sectional view, showing a part of the internal structure of the engine unit,
- FIG. 8: is a side elevational view of a V-belt,
- FIG. 9: is a cross sectional view, taken along the line IX-IX of FIG. 8,
- FIG. 10: is an illustration, showing a winding condition of the V-belt, and (a) shows a condition at a low speed and (b) shows a condition at the top speed,
- FIG. 11: is an illustration, showing a sheave surface of a primary sheave according to Embodiment 2, (a) is a front elevational view, and (b) a cross sectional view,
- FIG. 12: is an illustration, showing a sheave surface of a secondary sheave according to Embodiment 2, and (a) is a front elevational view, and (b) a cross sectional view,
- FIG. 13: is a front elevational view of the sheave surface according to a variation,
- FIG. 14: is a graph, showing test data, and
- FIG. 15: is a graph, showing other test data.

### Description of Reference Numerals:

- 10:: motorcycle (straddle type vehicle)
- 28:: engine unit
- 29:: engine
- 30:: belt type continuously variable transmission
- 71:: primary sheave
- 71a:: fixed sheave half (sheave body)
- 71b:: movable sheave half (sheave body)
- 72:: secondary sheave
- 72a:: fixed sheave half (sheave body)
- 71b:: movable sheave half (sheave body)
- 73:: V-belt
- 91:: groove
- 93:: chrome plating layer

### Embodiment 1

Hereunder, an embodiment of the present teaching will be described based upon the accompanying drawings.

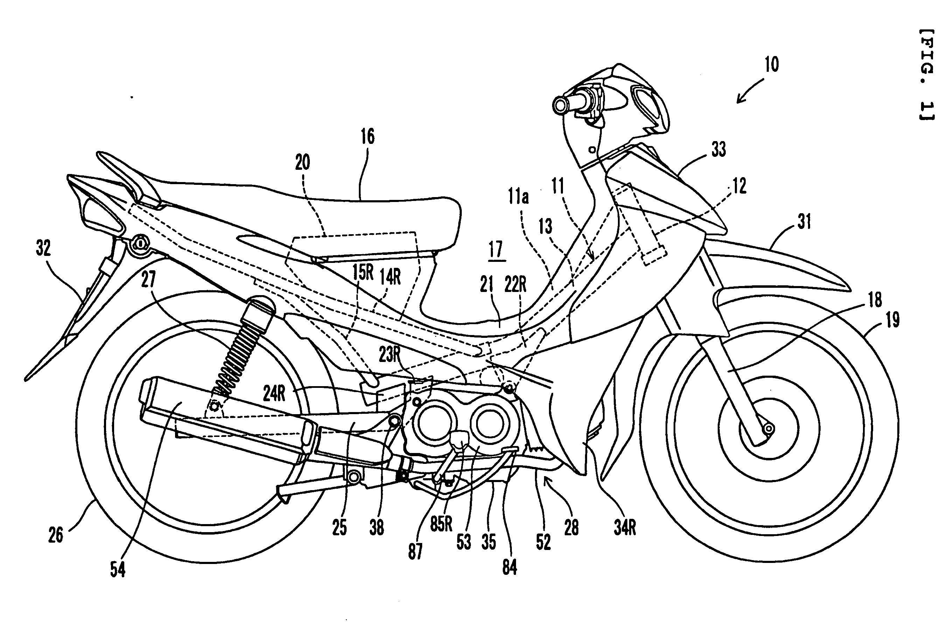

As shown in FIG. 1, a straddle type vehicle according to this embodiment is a motorcycle 10. The motorcycle 10 has a vehicle frame 11 forming a framework and a seat 16 on which a rider sits. The motorcycle 10 is the so-called moped type motorcycle. However, the straddle type vehicle according to the present teaching can be motorcycles other than the moped type (such as, for example, motorcycle type and scooter type motorcycles) or straddle type vehicles other than motorcycles (such as, for example, ATVs).

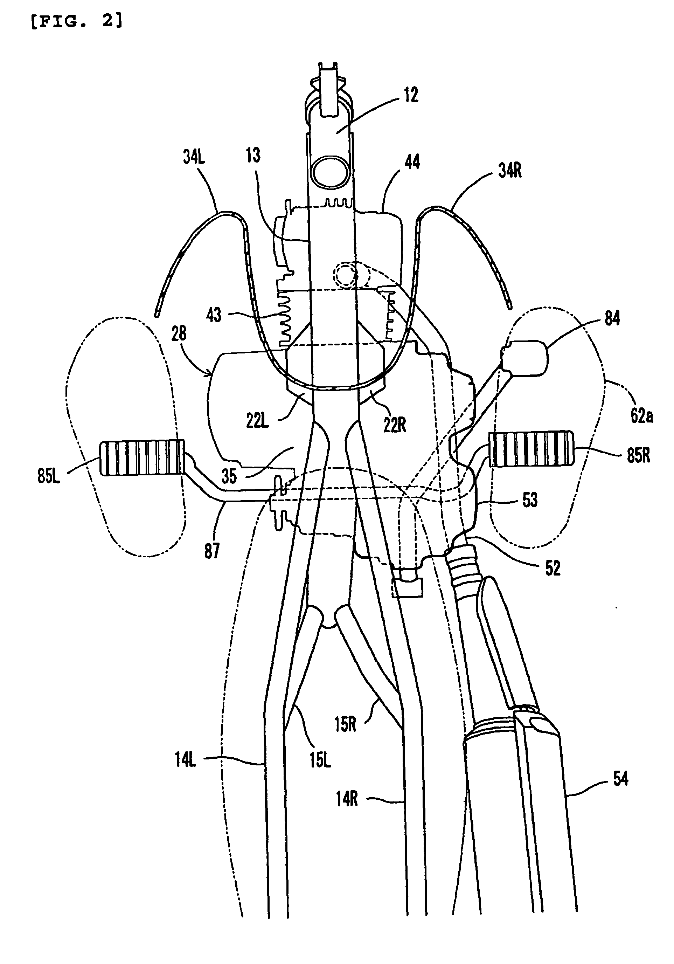

In the following descriptions, the fore to aft and lateral directions mean directions which the rider sitting on the seat 16 perceives. The vehicle frame 11 includes a steering head pipe 12, a single main frame 13 extending obliquely downward rearward from the steering head pipe 12, a left and right pair of seat rails 14L (see FIG. 2), 14R extending obliquely upward rearward from a mid portion of the main frame 13, and left and right seat pillar tubes 15L, 15R connected to a rear end portion of the main frame 13 and mid portions of the seat rails 14L, 14R.

A vehicle cover 21 covers top and lateral sides of the vehicle frame 11. A space 17 recessed downward in the side elevational view is defined above the vehicle cover 21 and in front of the seat 16. Also, a center tunnel 11 a through which the main frame 13 extends is defined under the vehicle cover 21.

The steering head pipe 12 supports a front wheel 19 via a front fork 18. The seat rails 14L, 14R support a fuel tank 20 and the seat 16 thereabove. The seat 16 extends from an upper location of the fuel tank 20 toward rear ends of the seat rails 14L, 14R. The fuel tank 20 is disposed above top surfaces of respective front half portions of the seat rails 14L, 14R and is covered with the vehicle cover 21 and the seat 16.

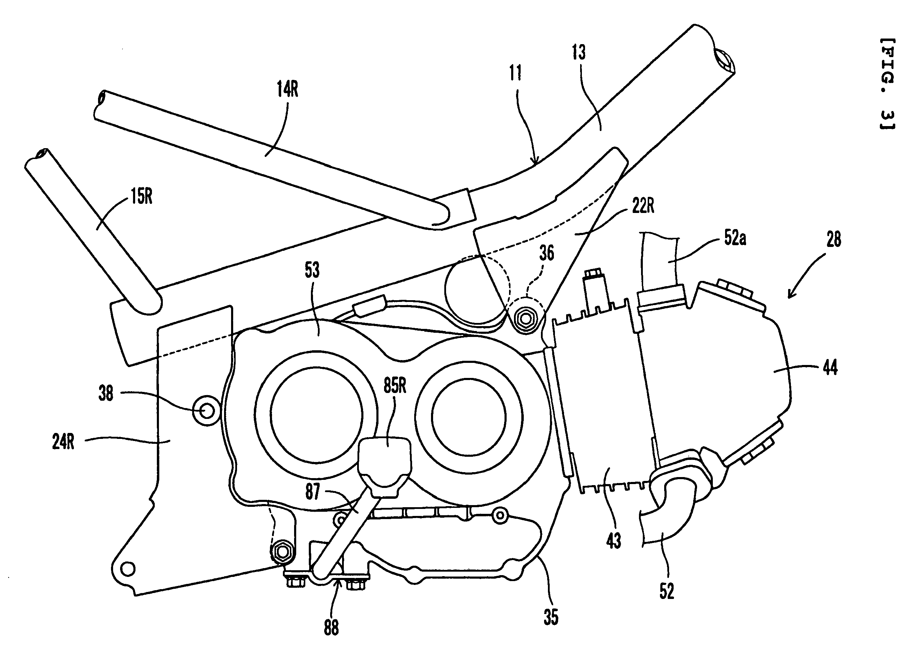

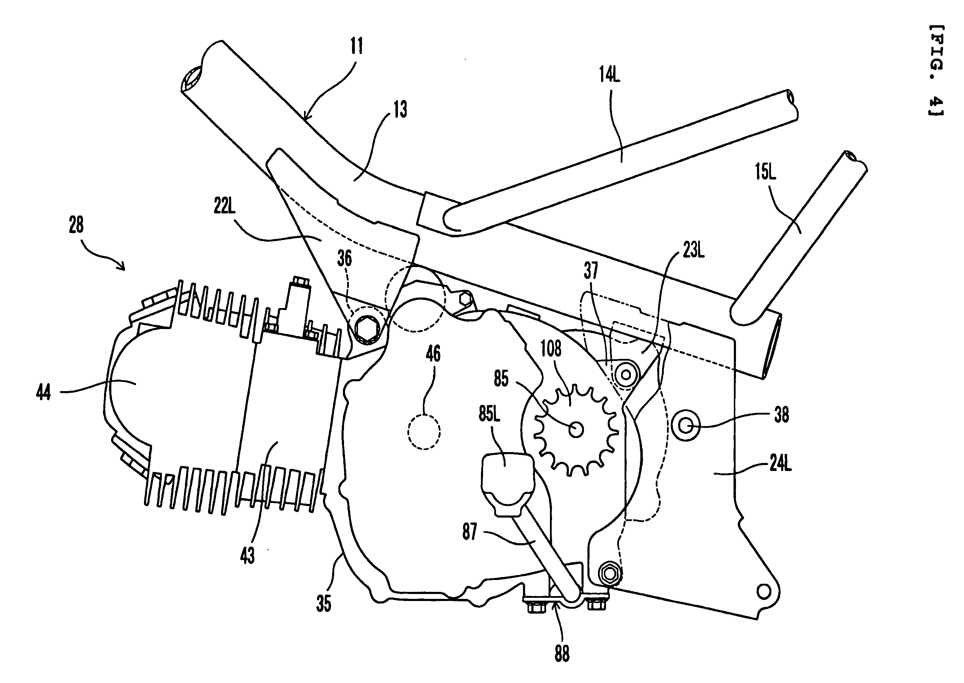

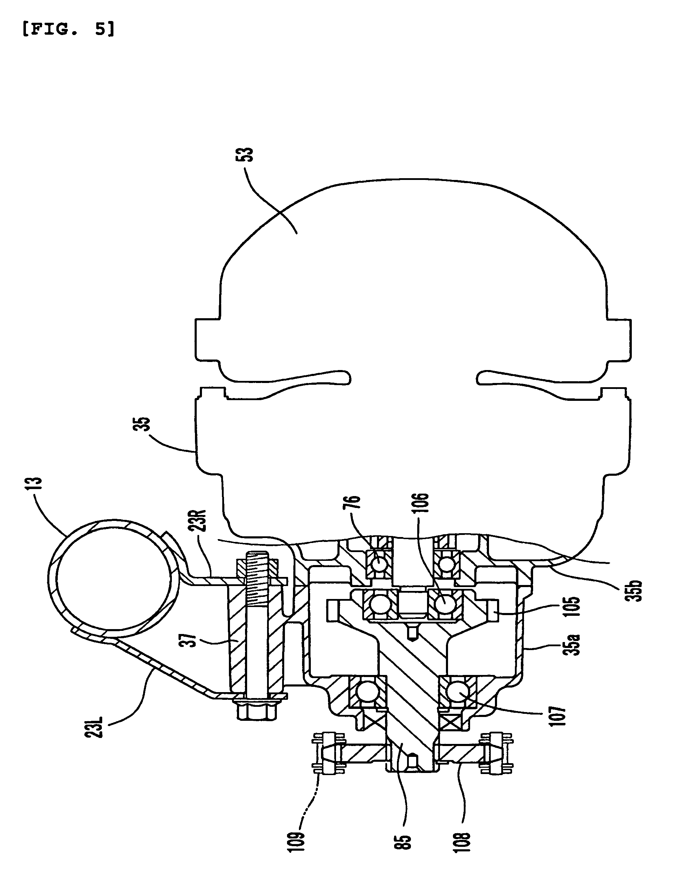

A first pair of left and right engine brackets 22L, 22R (see FIGs. 3 and 4) protrude downward from the mid portion of the main frame 13. The rear end portion of the main frame 13 has a second pair of left and right engine brackets 23L, 23R (see FIG. 5) and a pair of left and right rear arm brackets 24L, 24R (see FIGs. 3 and 4).

The rear arm brackets 24L, 24R protrude downward from the rear end portion of the main frame 13. The rear arm brackets 24L, 24R have a pivot shaft 38. As shown in FIG. 1, the pivot shaft 38 pivotally carries a front end portion of a rear arm 25. A rear end portion of the rear arm 25 supports a rear wheel 26. The vehicle frame 11 suspends the rear half of the rear arm 25 via cushion units 27.

As shown in FIG. 5, the second paired brackets 23L, 23R protrude downward from the rear end portion of the main frame 13. The second pair of left and right engine brackets 23L, 23R are spaced apart from each other and oppose each other in a width direction of the vehicle.

As shown in FIG. 1, the vehicle frame 11 supports an engine unit 28 driving the rear wheel 26. Specifically, as shown in FIG. 4, the engine unit 28 includes a crankcase 35, a cylinder 43 and a cylinder head 44. The crankcase 35 has first and second engine mount sections 36, 37. The respective first engine mount sections 36 protrude upward from a top side of a front end portion of the crankcase 35 and are supported by the first engine brackets 22L, 22R. The respective engine mount sections 37 protrude obliquely upward rearward from a top side of a rear end portion of the crankcase 35 and are supported by the second paired engine brackets 23L, 23R (see FIG. 5 also). The crankcase 35 thus depends from the main frame 13.

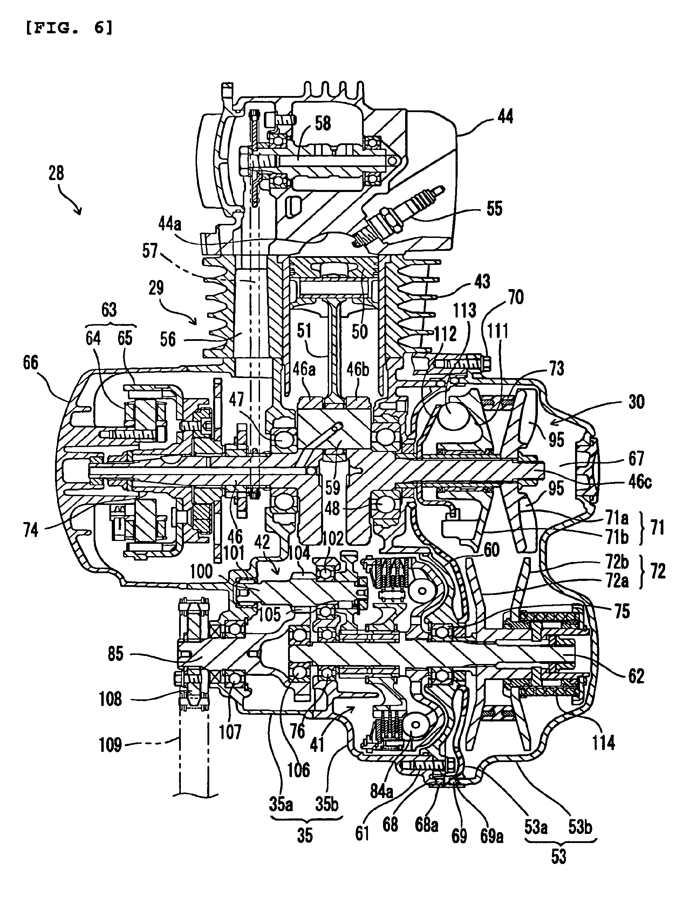

The engine unit 28 includes an engine 29 and a belt type continuously variable transmission (hereunder, called CVT) 30 (see FIG. 6), details of which will be described later. Although the engine 29 is not limited to any types, the engine 29 in this embodiment is a four-stroke, single cylinder engine.

As shown in FIG. 1, the motorcycle 10 includes a front fender 31 covering a top side and a rear side of the front wheel 19 and a rear fender 32 covering a portion of the rear wheel 28 between top and rear sides thereof. Also, the motorcycle 10 includes a front cowling 33 and lateral leg shields 34L, 34R (see FIG. 2) in addition to the vehicle cover 21.

As shown in FIG. 2, footrests 85L, 85R made of rubber or the like are disposed on the left and right sides of the engine unit 28. The crankcase 35 of the engine unit 28 supports the left and right footrests 85L, 85R via a coupling bar 87 made of metal and an attaching plate 88 (see FIGs. 3 and 4) fixed to the coupling bar 87.

As shown in FIGs. 1 and 2, a brake pedal 84 is disposed in front of the footrest 85R on the right side. The brake pedal 84 extends below a transmission case 53 and projects obliquely forward on the right side. The brake pedal 84 also extends obliquely upward forwardly on the right side of the transmission case 53. As shown in FIG. 2, when the motorcycle 10 runs, the right foot 62a of the rider is positioned next to the transmission case 53 in the width direction of the vehicle.

Next, an internal structure of the engine unit 28 will be described. As shown in FIG. 6, the engine unit 28 includes the engine 29, the CVT 30, a centrifugal clutch 41 and a reduction gear mechanism 42.

The engine 29 includes the crankcase 35, the cylinder 43 coupled with the crankcase 35 and the cylinder head 44 coupled with the cylinder 43. The crankcase 35 has divided two case blocks, i.e., a first case block 35a positioned on the left side and a second case block 35b positioned on the right side. The first case block 35a and the second case block 35b oppose each other in the width direction of the vehicle.

The crankcase 35 contains a crankshaft 46 therein. The crankshaft 46 extends in the width direction of the vehicle to be disposed horizontally. The crankshaft 46 is journaled by the first case block 35a via a bearing 47 and the second case block 35b via a bearing 48.

A piston 50 is slidably disposed within the cylinder 43. One end of a connecting rod 51 is coupled with the piston 50. A crank pin 59 is disposed between a left side crank arm 46a and a right side crank arm 46b. The other end of the connecting rod 51 is coupled with the crank pin 59.

A recessed portion 44a and intake ports (not shown) and exhaust ports (not shown) both communicating with the recessed portion 44a are defined in the cylinder head 44. An ignition plug 55 is inserted into the recessed portion 44a of the cylinder head 44. As shown in FIG. 3, intake pipes 52a are connected to the intake ports, while exhaust pipes 52 are connected to the exhaust ports. As shown in FIGs. 1 and 2, the exhaust pipes 52 extend from the cylinder head 44 rearward and obliquely downward on the right side and further extend rearward below the transmission case 53. The exhaust pipes 52 are then connected to a muffler placed on the right side of the rear wheel 26.

As shown in FIG. 6, a cam chain chamber 56 is defined in the inside of the cylinder 43 on the left side thereof to connect the inside of the crankcase 35 and the inside of the cylinder head 44. A timing chain 57 is disposed in the cam chain chamber 56. The timing chain 57 is wound around the crankshaft 46 and the camshaft 58. The camshaft 58 rotates with the rotation of the crankshaft 46 to move each of intake valves and exhaust valves, which are not shown, between an open position and a closed position.

A generator case 66 containing a generator 63 is detachably mounted to a left side of a front half of the first case block 35a. The transmission case 53 containing the CVT 30 is mounted to a right side of the second case block 35b.

An opening is defined in a right side surface of a rear half of the second case block 35b. A clutch cover 60 closes the opening. The clutch cover 60 is detachably fixed to the second case block 35b by bolts 61.

The transmission case 53 is formed independently from the crankcase 35. The transmission case 53 includes an inner case 53a covering an inner side (left side) of the CVT 30 in the width direction of the vehicle and an outer case 53b covering an outer side (right side) of the CVT 30 in the width direction of the vehicle. The inner case 53a is attached to a right surface of the crankcase 35, while the outer case 53b is attached to a right surface of the inner case 53a. A belt chamber 67 is defined inside of the inner case 53a and the outer case 53b to contain the CVT 30 therein.

As shown in FIG. 6, a right end portion of the crankshaft 46 extends to the belt chamber 67 through the second case block 35b and the inner case 53a. A primary sheave 71 of the CVT 30 is fitted onto the right end portion of the crankshaft 46. The primary sheave 71 thus rotates with the rotation of the crankshaft 46. A right portion of the crankshaft 46 (strictly, a portion positioned on the right side of the bearing 48) forms a primary sheave shaft 46c.

On the other hand, the left end portion of the crankshaft 46 extends into the generator case 66 through the first case block 35a. The generator 63 is mounted to the left end portion of the crankshaft 46. The generator 63 includes a stator 64 and a rotor opposing the stator 64. The rotor 65 is fixed to a sleeve 74 rotating together with the crankshaft 46. The stator 64 is fixed to the generator case 66.

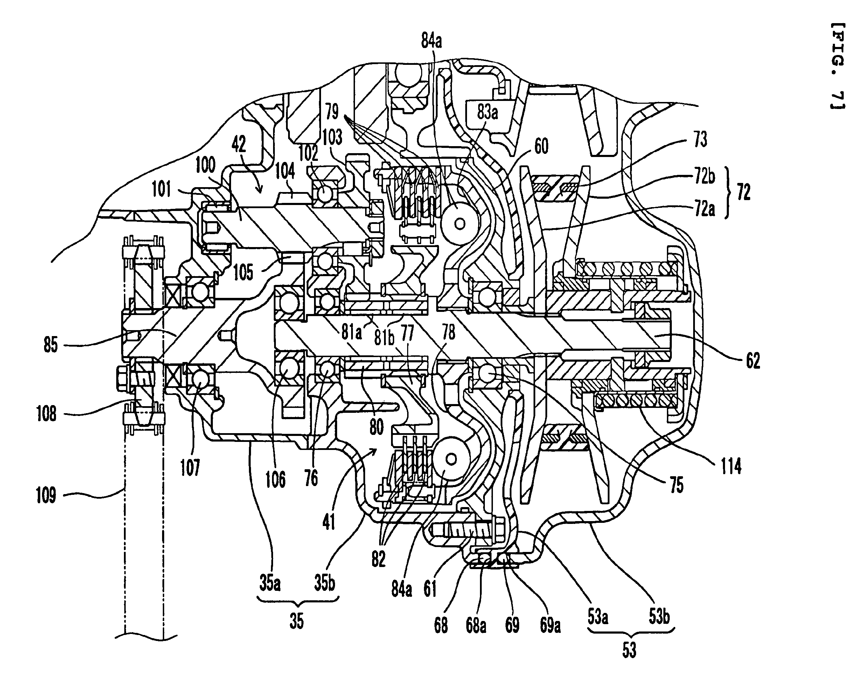

A secondary sheave shaft 62 is disposed in the rear half of the crankcase 35 to extend parallel to the crankshaft 46. As shown in FIG. 7, the clutch cover 60 supports the central portion of the secondary sheave shaft 62 via a bearing 75. The left end portion of the second case block 35b supports a left portion of the secondary sheave shaft 62 via a bearing 76.

A right end portion of the secondary sheave shaft 62 extends to the belt chamber 67 through the second case block 35b and the clutch cover 60. A secondary sheave 72 of the CVT 30 is coupled with the right end portion of the secondary sheave shaft 62.

As shown in FIG. 6, the CVT 30 includes the primary sheave 71, the secondary sheave 72 and the V-belt 73 wound around the primary sheave 71 and the secondary sheave 72. As described above, the primary sheave 71 is mounted to the right portion of the crankshaft 46. The secondary sheave 72 is coupled with the right portion of the secondary sheave shaft 62.

The primary sheave 71 includes a fixed sheave half 71 a positioned outside in the width direction of the vehicle, and a movable sheave half 71 b positioned inside in the width direction of the vehicle and opposing the fixed sheave half 71 a. The fixed sheave half 71 a is fixed to the right end portion of the primary sheave shaft 46c and rotates together with the primary sheave shaft 46c. The movable sheave half 71 b is placed on the left side of the fixed sheave half 71 a and is slidably mounted to the primary sheave shaft 46c. The movable sheave half 71 b thus rotates together with the primary sheave shaft 46c and is also slidable in the axial direction of the primary sheave shaft 46c. A belt groove is formed between the fixed sheave half 71 a and the movable sheave half 71 b.

Cooling fans 95 are formed on an outer surface (right side surface in FIG. 6) of the fixed sheave half 71 a. A cam surface 111 is formed on the left portion of the movable sheave half 71 b. A cam plate 112 is disposed on the left side of the cam surface 111. A roller weight 113 is placed between the cam surface 111 of the movable sheave 71 b and the cam plate 112.

The secondary sheave 72 includes a fixed sheave half 72a positioned inside in the width direction of the vehicle, and a movable sheave half 72b positioned outside in the width direction of the vehicle and opposing the fixed sheave half 72a. The movable sheave half 72b is mounted to the right end portion of the secondary sheave shaft 62. The movable sheave half 72b is rotatable together with the secondary sheave shaft 62 and is slidable on the secondary sheave shaft 62 in the axial direction thereof. A compression coil spring 114 is disposed at the right end of the secondary sheave shaft 62. The movable sheave half 72b receives the leftward urging force of the compression coil spring 114 that is directed leftward. A shaft core portion of the fixed sheave half 72a is a cylindrical slide collar that is fitted on the secondary sheave shaft 62 by spline connection.

A speed reduction ratio of the CVT 30 is decided in accordance with relationships between a magnitude of the force with which the roller weight 113 pushes the movable sheave half 71 b rightward and a magnitude of the force with which the compression coil spring 114 pushes the movable sheave half 72b of the secondary sheave 72 leftward.

That is, upon increase of the rotational speed of the primary sheave shaft 46c, the roller weight 113 receives the centrifugal force and moves outward in the radial direction to push the movable sheave half 71 b rightward. Then, the movable sheave half 71 b moves rightward and the belt winding radius in the primary sheave 71 becomes larger. Following this operation, the belt winding radius in the secondary sheave 72 becomes smaller. The movable sheave half 72b of the secondary sheave 72 moves rightward against the urging force of the compression coil spring 114. As a result, the winding radius of the V-belt 73 in the primary sheave 71 becomes larger, while the winding radius in the secondary sheave 72 becomes smaller. The speed reduction ratio becomes smaller, accordingly.

In the meantime, upon decrease of the rotational speed of the primary sheave shaft 46c, the roller weight 113 moves inward in the radial direction along the cam surface 111 of the movable sheave half 71 b and the cam plate 112 because the centrifugal force of the roller weight 113 becomes smaller. Therefore, the force with which the roller weight 113 pushes the movable sheave half 71 b rightward becomes smaller. Then, the urging force of the compression coil spring 114 becomes larger relative to the above force. The movable sheave half 72b of the secondary sheave 72 moves leftward. In response to this movement, the movable sheave half 71b of the primary sheave 71 also moves leftward. As a result, the belt winding radius in the primary sheave 71 becomes smaller, while the belt winding radius in the secondary sheave 72 becomes larger. The speed reduction ratio becomes larger, accordingly.

The fixed sheave half 71 a and the movable sheave half 71b of the primary sheave 71 are made of aluminum or an aluminum alloy containing aluminum as a part thereof. Sheave surfaces (surfaces contacting with the V-belt 73) of the fixed sheave half 71a and the movable sheave half 71b of the primary sheave 71 are plated with chrome. Consequently, each sheave surface hardness of the fixed sheave half 71 a and the movable sheave half 71b teaches approximately 1,000Hv. However, the plating material for coating the sheave surfaces is not limited to the chrome if the material is sufficient to enhance the wear resistance.

The fixed sheave half 72a and the movable sheave body 72b of the secondary sheave 72 are made of stainless steel (SUS304). Additionally, no sheave surfaces of the fixed sheave half 72a and the movable sheave body 72b of the secondary sheave 72 are plated with chrome. Consequently, The respective sheave surface hardness values of the fixed sheave half 72a and the movable sheave half 72b reach approximately 400Hv.

A seal groove 68a is formed along a periphery of the inner case 53a on the left side thereof. A periphery of the second case block 35b on the right side thereof is inserted into the seal groove 68a. Additionally, an O-ring 68 is interposed between the inner case 53a and the second case block 35b in the seal groove 68a. Also, another seal groove 69a is formed along the periphery of the inner case 53a on the right side thereof. A periphery of the outer case 53b is inserted into the seal groove 69a. Another O-ring 69 is interposed between the inner case 53a and the outer case 53b in the seal groove 69a. The outer case 53b and the second case block 35b are coupled with each other by bolts 70 under a condition that the inner case 53a is interposed between the outer case 53b and the second case block 35b.

As shown in FIG. 7, the centrifugal clutch 41 is mounted to the left portion of the secondary sheave shaft 62. The centrifugal clutch 41 is a wet type multiple disk clutch and includes a generally cylindrical clutch housing 78 and a clutch boss 77. The clutch housing 78 is fitted onto the secondary sheave shaft 62 by spline connection and rotates in unison with the secondary sheave shaft 62. A plurality of circular clutch disks 79 are attached to the clutch housing 78. The clutch disks 79 are spaced apart from each other in the axial direction of the secondary sheave shaft 62.

A cylindrical gear 80 is rotatably fitted on and around the left portion of the secondary sheave shaft 62 via two bearings 81a, 81b. The clutch boss 77 is positioned inside relative to the clutch disks 79 in the radial direction and is positioned outside relative to the gear 80 in the radial direction. The clutch boss 77 meshes with the gear 80. The gear 80 thus rotates together with the clutch boss 77. A plurality of circular friction disks 82 are attached to the clutch boss 77 externally in the radial direction. The friction disks 82 are spaced apart from each other in the axial direction of the secondary sheave shaft 62. The respective friction disks 82 are interposed between the neighboring clutch disks 79, 79.

A plurality of cam surfaces 83a are formed on the left side of the clutch housing 78. Roller weights 84a are disposed between the cam surfaces 83a and the clutch disk 79 placed at the right-most position and opposing the cam surfaces 83a.

The centrifugal clutch 41 is automatically switched between a clutch-in condition (connected condition) and a clutch-out condition (disconnected condition) in accordance with magnitudes of the centrifugal force affected to the roller weights 84a.

That is, when a rotational speed of the clutch housing 78 exceeds a preset speed, the centrifugal force moves the roller weights 84a outward in the radial direction. The roller weights 84a thus push the clutch disks 79 leftward. As a result, the clutch disks 79 and the friction disks 82 compressively contact with each other. The centrifugal clutch 41 thus is in the clutch-in condition in which the driving force of the secondary sheave shaft 62 is transmitted through the gear 80 and the reduction gear mechanism 42 to the output shaft 85.

On the other hand, when the rotational speed of the clutch housing 78 becomes lower than the preset speed, the centrifugal force exerted on the roller weights 84a becomes smaller. The roller weights 84a thus move inward in the radial direction. As a result, the clutch disks 79 and the friction disks 82 are released from the state of compressive contact. The centrifugal clutch 41 thus is brought in the clutch-out condition in which no driving force of the secondary sheave shaft 62 is transmitted through the gear 80 and the reduction gear mechanism 42. Additionally, in FIG. 7, the front (upper side in FIG. 7) portion of the centrifugal clutch 41 represents the clutch-out condition, while the rear (lower side in FIG. 7) portion thereof represents the clutch-in condition.

The reduction gear mechanism 42 is interposed between the centrifugal clutch 41 and an output shaft 85. The reduction gear mechanism 42 has a shift shaft 100 extending parallel to the secondary sheave shaft 62 and the output shaft 85. The shift shaft 100 is journaled for rotation by the first case block 35a via a bearing 101 and is also journaled for rotation by the second case block 35b via a bearing 102. A first shift gear 103 meshing with the gear 80 is placed at a right end portion of the shift shaft 100.

A second shift gear 104 having a diameter smaller than a diameter of the first shift gear 103 is placed at a central portion of the shift shaft 100. A third shift gear 105 meshing with the second shift gear 104 is externally and circumferentially formed at a right end portion of the output shaft 85. The left end portion of the secondary sheave shaft 62 supports an internal circumferential portion of the right end portion of the output shaft 85 via a bearing 106. Accordingly, the secondary sheave shaft 62 journals the output shaft 85 for rotation via the bearing 106. A left end portion of the first case block 35a journals a central portion of the output shaft 85 for rotation via a bearing 107.

In the structure described above, the clutch boss 77 and the output shaft 85 are coupled with each other through the gear 80, the first shift gear 103, the shift shaft 100, the second shift gear 104 and the third shift gear 105. The output shaft 85 thus rotates with the rotation of the clutch boss 77.

A left end portion of the output shaft 85 extends through the first case block 35a and projects outside of the crankcase 35. A drive sprocket 108 is fixed to the left end portion of the output shaft 85. A chain 109 is engaged with the drive sprocket 108 to transmit the driving force from the output shaft 85 to the rear wheel 26. Additionally, the mechanism for transmitting the driving force to the rear wheel 26 is not limited to the chain 109. Other components such as, for example, a transmitting belt, a gear train of plural gears assembled with each other and a drive shaft may be used as the mechanism for transmitting the driving force from the output shaft 85 to the rear wheel 26.

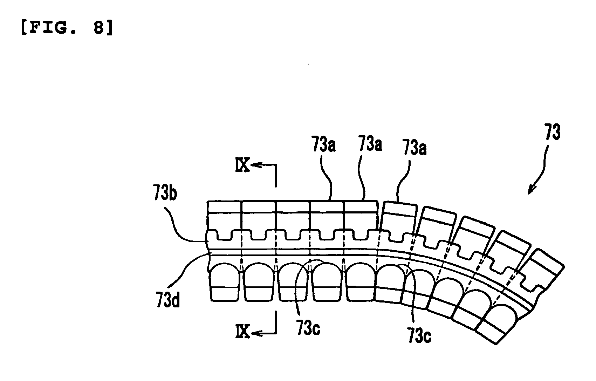

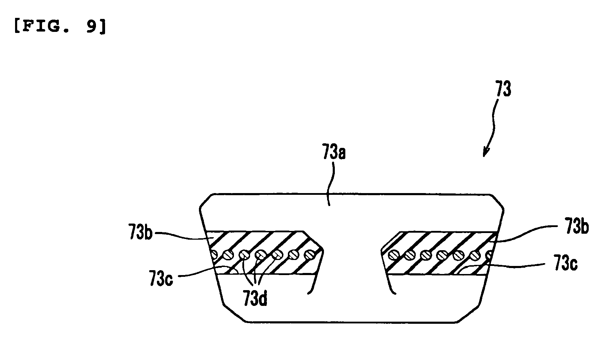

Next, a structure of the V-belt 73 will be described. As shown in FIGs. 8 and 9, the V-belt 73 includes a plurality of resin blocks 73a aligned in one direction and a pair of coupling bodies 73b for coupling the resin blocks 73a. As shown in FIG. 9, each resin block 73a is generally formed as a trapezoid to extend along the respective belt grooves of the primary sheave 71 and the secondary sheave 72. Recessed portions 73c recessed inward are formed at respective lateral sides of each resin block 73a.

The coupling bodies 73b are endlessly formed. As shown in FIG. 8, the coupling bodies 73b extend in the alignment direction of the resin blocks 73a and are inserted into the recessed portions 73c of the respective resin blocks 73a. Because the coupling bodies 73b are inserted into the recessed portions 73c of the resin blocks 73a as thus described, the plurality of resin blocks 73 are coupled with each other via the paired coupling bodies 73b. Each coupling body 73b is made of rubber. As shown in FIG. 9, a plurality of reinforcing core wires 73d are embedded in each coupling body 73b of rubber. In this V-belt 73, the left and right lateral side surfaces of the resin blocks 73a and the coupling bodies 73b are contact surfaces in contact with the respective sheave surfaces of the primary sheave 71 and the secondary sheave 72.

Additionally, any V-belts are sufficient to be the V-belt for the present teaching if at least a part of the contact portion thereof contacting with the sheave surfaces is made of resin. That is, the V-belt for the present teaching is not limited to the V-belt 73 in which the coupling bodies 73b couple the plurality of resin blocks 73a with each other.

As thus described, according to the CVT 30 of this embodiment, the sheave surface hardness of the secondary sheave 72 is lower than the sheave surface hardness of the primary sheave 71. Therefore, the wear of the V-belt 73 in the secondary sheave 72 can be avoided even in the top speed where the contact pressure of the sheave surfaces is high. On the other hand, because the secondary sheave 72 is hardly affected by fluctuations of the engine speed in comparison with the primary sheave 71, the secondary sheave 72 is unlikely to remarkably wear in comparison with the primary sheave 71, even though the sheave surface hardness of the secondary sheave 72 is relatively low. Accordingly, both of the prevention of the wear of the V-belt 73 and the prevention of the wear of the sheaves (the primary sheave 71 and the secondary sheave 72) can be highly compatibly ensured.

In this embodiment, the sheave body of the primary sheave 71 (the fixed sheave half 71 a and the movable sheave half 71 b) is made of aluminum and the sheave surface of the sheave body is coated with chrome. Therefore, the surface hardness of the sheave surface can be raised while the sheave body is lightened. Also, because aluminum has good cooling retaining property, the cooling performance of the primary sheave 71 can be enhanced. Higher performance of the CVT 30 in tum thus can be achieved. On the other hand, the fixed sheave half 72a and the movable sheave half 72b of the secondary sheave 72 are made of stainless steel and the sheave surfaces thereof are not plated with chrome. Accordingly, the CVT 30 can be inexpensively produced to the extent that no plating is necessary for the secondary sheave 72. Further, according to this embodiment, the surface hardness of the sheave surface of the primary sheave 71 can be raised higher than the surface hardness of the sheave surface of the secondary sheave 71 by the relatively simple method or plating process.

Additionally, stainless steel has the superior wear resistance. The corrosion resistance of the secondary sheave 72 thus can be maintained in a good state without the sheave surface of the secondary sheave 72 being plated. Because any rust hardly occurs, the ambient air can cool the secondary sheave 72 without requiring any particular measures.

Because the secondary sheave 72 in this embodiment is made of stainless steel, the sheave surface hardness of the secondary sheave 72 can be approximately 400Hv. However, the sheave surface hardness of the secondary sheave 72 is only required to be equal to or higher than 100Hv in view of the prevention of the wear of the sheave surface, and thus is not limited to be about 400Hv.

In the CVT 30 according to this embodiment, a distance in which the V-belt 73 moves in the radial direction of the secondary sheave 72 while a condition under which the speed reduction ratio is the maximum value (top speed) varies to another condition under which the speed reduction ratio is the minimum value (low speed) is shorter than a distance in which the V-belt 73 moves in the radial direction of the primary sheave 72. Specifically, the distance of the movement of the V-belt 73 in the radial direction of the sheaves is represented by a difference between the belt winding radius at the top speed and the belt winding radius at the low speed. In this embodiment, the difference between the belt winding radius at the top speed and the belt winding radius at the low speed in the primary sheave 71 is approximately 36.5mm, while the difference between the belt winding radius at the top speed and the belt winding radius at the low speed in the secondary sheave 72 is approximately 32.5mm (<36.5mm).

As thus discussed, the amount of the movement of the V-belt 73 in the radial direction in the secondary sheave 72 is shorter than that in the primary sheave 71. Therefore, the wear of the secondary sheave 72 can be prevented even though the sheave surface hardness of the secondary sheave 72 is lower than the sheave surface hardness of the primary sheave 71.

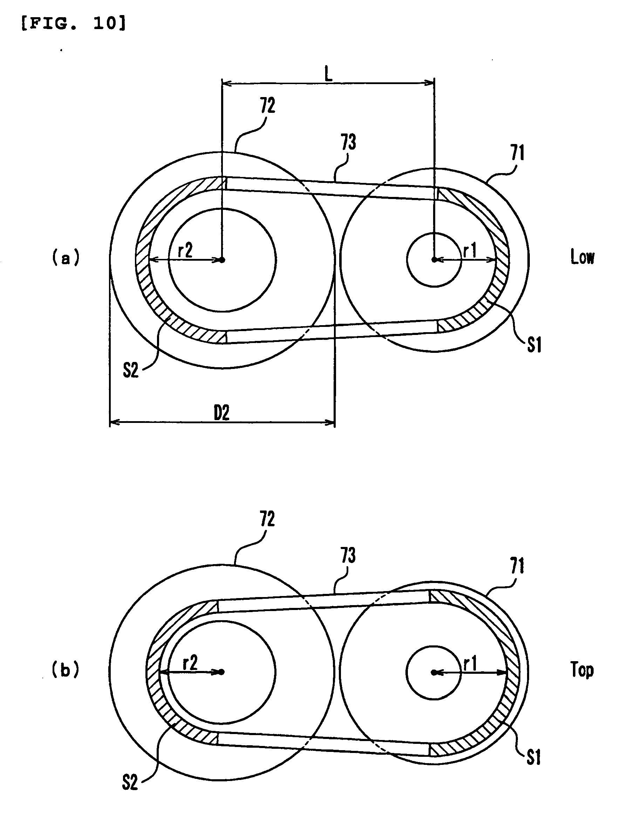

As shown in FIG. 10(a), in the CVT 30 according to this embodiment, a distance between the primary sheave 71 and the secondary sheave 72 is short in comparison with sizes of the primary sheave 71 and the secondary sheave 72. Specifically, in this embodiment, a distance L between the axis of the primary sheave 71 and the axis of the secondary sheave 72 is less than double the diameter D2 of the secondary sheave 72. Also, both of the primary sheave 71 and the secondary sheave 72 are disposed between the axis of the front wheel 19 and the rear wheel 26 (see FIG. 1). In this embodiment, therefore, a ratio of the part contacting with the sheave surfaces of the primary sheave 71 and the secondary sheave 72 to the whole length of the V-belt 73 is large. Accordingly, ingoing and outgoing times of the V-belt 73 to and from the sheave grooves are frequent. The CVT 30 thus intrinsically has the structure in which the V-belt 73 is likely to wear. In this embodiment, however, the wear of the V-belt 73 can be prevented as discussed above. Thus, no problem arises even though the distance between the primary sheave 71 and the secondary sheave 72 is short.

### Embodiment 2

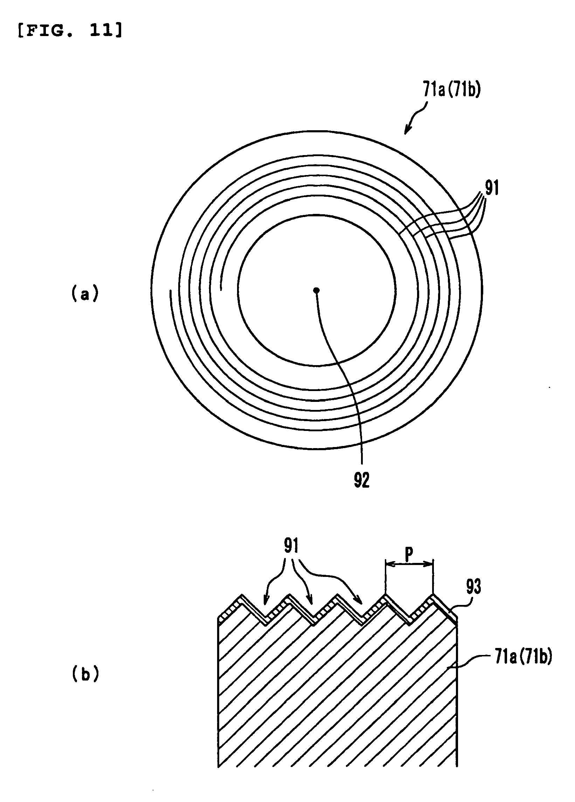

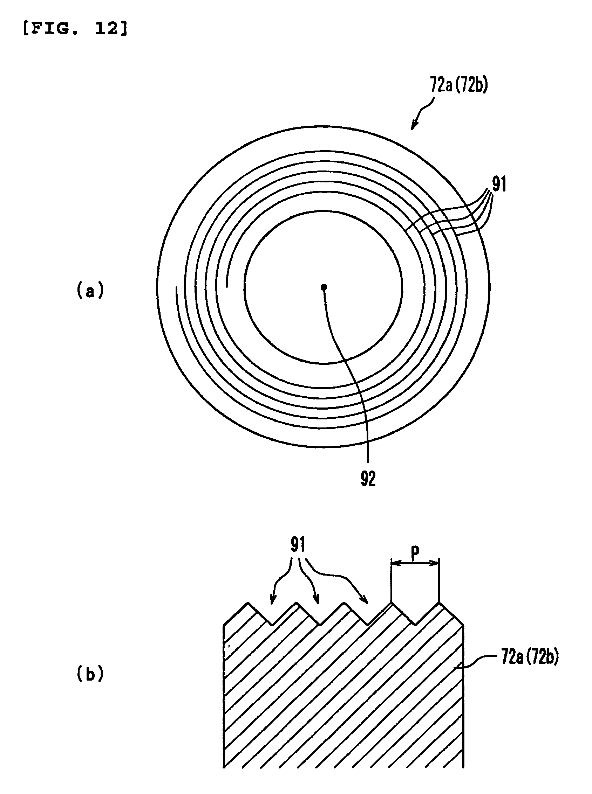

As shown in FIGs. 11 and 12, a CVT 30 according to Embodiment 2 has a structure in which a spiral groove is formed in each of the sheave surfaces of the primary sheave 71 and the secondary sheave 72 of Embodiment 1.

The CVT 30 needs some frictional force between the sheaves 71, 72 and the V-belt 73 to properly transmit the driving force. In the meantime, however, because the V-belt 73 travels between the primary sheave 71 and the secondary sheave 72, respective portions of the V-belt 73, in local views, continuously go into the sheave grooves and go out therefrom. Some extent of slidability (hereunder, "lubrication property" is used) thus is necessary between the V-belt 73 and the respective sheaves 71, 72. This is because, unless the lubrication property is ensured, heat is generated by the friction between the V-belt 73 and the sheaves 71, 72, and the CVT 30 is likely to be under an excessively heated condition.

Meanwhile, the CVT 30 is normally used under the circumstances in which no oil, water or the like are allowed to enter the CVT 30 (hereunder, referred to "under the dry circumstances"). No lubricating agent is permissible to be applied between the V-belt 73 and the sheaves 71, 72. Thus, it is conceivable that the lubrication property between the sheaves 71, 72 and the V-belt 73 is brought mainly by powder originating from the V-belt 73 (wear powder). That is, it is conceivable that the sheaves 71, 72 and the V-belt 73 are slidable with each other while keeping some extent of the friction because the wear powder originating from the V-belt 73 is retained on the sheave surfaces.

If, however, the sheave surfaces are smooth, proper retention of the wear powder on the contact portions with the V-belt 73 is difficult. If the retention is difficult, proper keeping of the lubrication property between the sheaves 71, 72 and the V-belt 73 is also difficult. Consequently, irregularities for retaining the wear powder are preferably given to the sheave surfaces (at least the portions in contact with the V-belt 73).

As shown in FIGs. 11 (a) and (b), in this embodiment, a groove 91 is formed on the sheave surfaces of the fixed sheave half 71 a and the movable sheave half 71 b of the primary sheave 71 by turning. Also, as shown in FIGs. 12(a) and (b), another groove 91 is formed on the sheave surfaces of the fixed sheave half 72a and the movable sheave half 72b of the secondary sheave 72 by turning.

The respective grooves 91 of this embodiment are spirally formed around axes 92 of the sheave halves 71 a, 71 b, 72a, 72b. As shown in FIG. 11 (b) and FIG. 12(b), because of having the grooves 91, cross sections of the sheave halves 71 a, 71 b, 72a, 72b in the radial direction are unevenly formed. Additionally, reference numeral 93 of FIG. 11(b) indicates a chrome plating layer.

A pitch [p] of the groove 91 is preferably, for example, 0.10mm. Surface roughness of each sheave surface is preferably, equal to or less than 0.5z, for example.

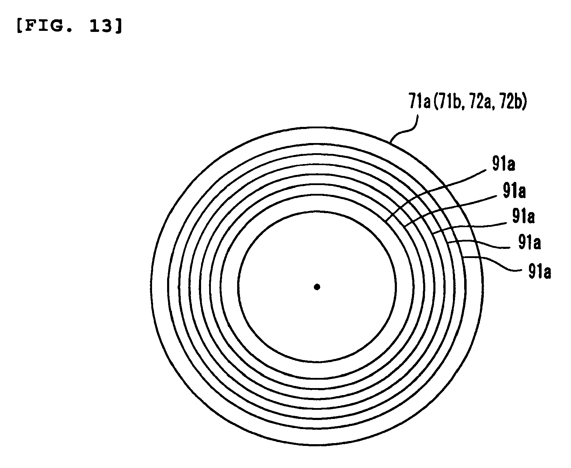

However, the respective grooves on the sheave surfaces are not limited to the spiral grooves 91. For example, as shown in FIG. 13, a plurality of coaxial circular grooves 91 a formed on each sheave surface are applicable. In view of properly retaining the wear powder, the grooves of the sheave surfaces are required to be formed in such a manner that the cross sections of the sheave halves 71 a, 71b, 72a, 72b in the radial direction are to be uneven. However, as long as the wear powder can be properly retained, configurations of the grooves on the sheave surfaces are not specifically limited.

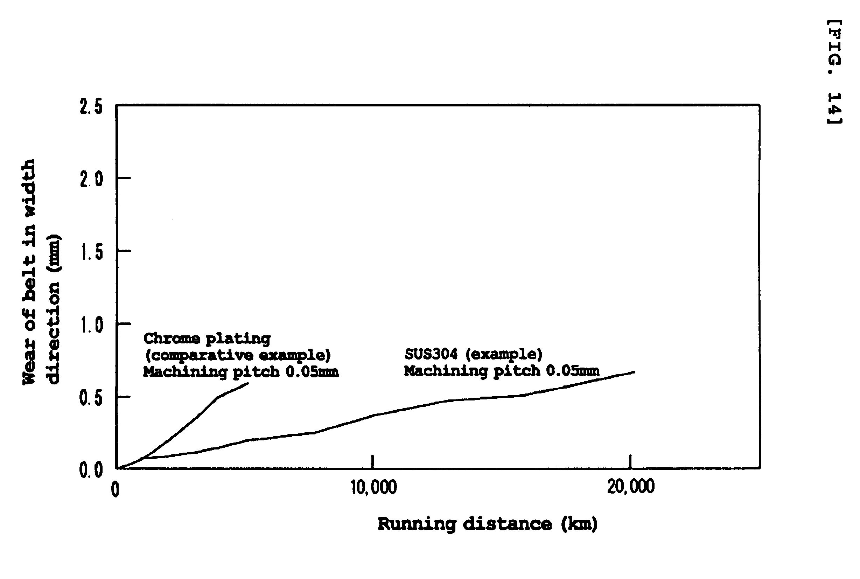

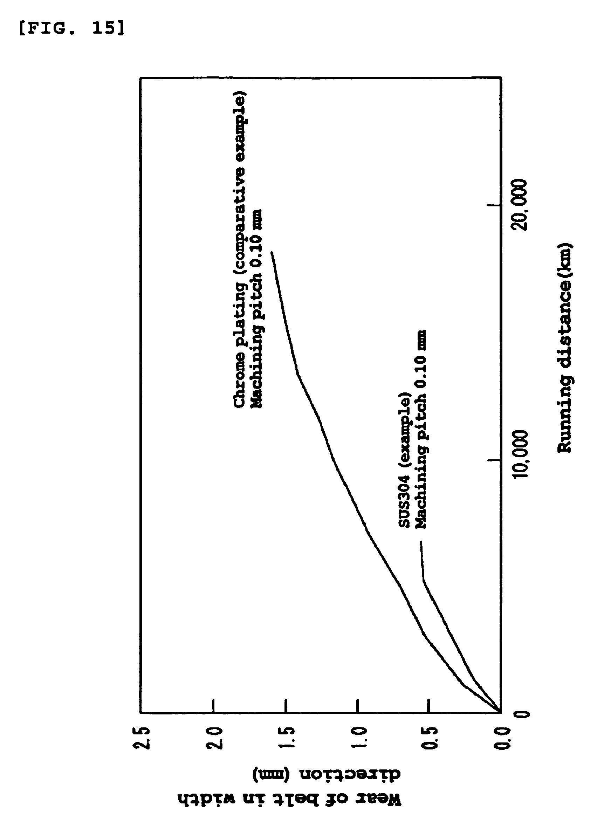

FIGs. 14 and 15 show test results indicating differences as to the belt wear based upon sheave surface hardness of the secondary sheave 72. In FIGs. 14 and 15, each horizontal axis indicates of the running distance of a motorcycle, while each vertical axis indicates the wear of the V-belt 73 in its width direction. In both tests shown in FIGs. 14 and 15, the sheave surface of the primary sheave 71 is plated with chrome. In the embodiments, the secondary sheave 72 is made of stainless steel, i.e., SUS304, and is not coated with any plating material. Therefore, the sheave surface hardness of the secondary sheave 72 is lower than the sheave surface hardness of the primary sheave 71. To the contrary, in the compared examples, the sheave surface of the secondary sheave 72 is plated with chrome. Thus, the sheave surface hardness of the secondary sheave 72 and the sheave surface hardness of the first sheave 71 are equal to each other.

FIG. 14 shows examples in which the pitch [p] of the groove is 0.05mm, while FIG. 15 shows examples in which the pitch [p] is 0.10mm. As understood from the figures, the wear of the V-belt 73 in the embodiments is less than in the comparative examples.

According to this embodiment, because each of the sheave surfaces of the primary sheave 71 and the secondary sheave 72 has the spiral groove 91, the wear powder of the V-belt 73 can be properly retained on the sheave surfaces. Accordingly, a good lubrication property can be ensured between the sheaves 71, 72 and the V-belt 73 while some extent of the frictional force is kept therebetween. As a result, the heat generation of the V-belt 73 can be prevented. In this point as well, both of the prevention of the wear of the V-belt 73 and the prevention of the wear of the sheaves 71, 72 can be highly compatibly ensured.

Also, according to this embodiment, because the wear of the sheaves 71, 72 is prevented, the uneven configuration on each sheave surface is hardly deteriorated with time elapsing. Accordingly, the lubrication property of the V-belt 73 can be maintained for a long period of time.

If the sheave surface of the secondary sheave 72 is plated with chrome, the plated chrome of the secondary sheave 72 whose contact pressure is high at the maximum drive speed (top speed) can wear away prior to the primary sheave 71, and excessive amount of the wear powder can be produced from the secondary sheave 72. In this embodiment, however, because the secondary sheave 72 is not plated with chrome, the wear power produced from the secondary sheave 72 does not cause any damage to the primary sheave 71. Also, the wear powder of the plated chrome is only produced from the primary sheave 71 whose contact pressure is low. Therefore, an amount of the wear powder produced from the whole sheaves can be small.

In addition, according to this embodiment, the grooves 91 are formed by turning the sheave surfaces of the respective sheaves 71, 72. The grooves 91 thus can be simply and inexpensively realized.

Possibility of Use in the Industry:

As thus described, the present teaching is useful with belt type continuously variable transmissions and straddle type vehicles having the same.

With the above embodiments, the inventors made every effort in their researches to achieve the object and paid attention to a difference between contact pressures (sheave thrust/ contact area) of the sheave surfaces of the primary sheave and the secondary sheave.

That is, in consideration of the primary sheave first, as shown in FIG. 10(a), if an engine speed is low (in other words, if a rotational speed of the primary sheave 71 is low), the speed reduction ratio of the belt type continuously variable transmission becomes large and a winding radius r1 of the V-belt 73 in the primary sheave 71 becomes relatively small. Accordingly, a contact area S1 between the primary sheave 71 and the V-belt 73 also becomes relatively small. Meanwhile, if the engine speed is low, the driving force (= sheave thrust) transmitted from the primary sheave 71 to the V-belt 73 is relatively small. Thus, the contact pressure of the sheave surface of the primary sheave 71 is not so large.

On the other hand, if the engine speed is high, the driving force transmitted from the primary sheave 71 to the V-belt 73 is relatively large. However, as shown in FIG. 10(b), if the engine speed is high, the speed reduction ratio becomes small and the winding radius r1 of the V-belt 73 in the primary sheave 71 becomes relatively large. Accordingly, the contact area S1 between the primary sheave 71 and the V-belt 73 becomes relatively large. Therefore, even though the engine speed is high, the contact pressure of the sheave surface of the primary sheave 71 is not so large.

To the contrary, the secondary sheave may have the following situations. That is, as shown in FIG. 10(a), if the engine speed is low, the speed reduction ratio becomes large and a winding radius r2 of the V-belt 73 in the secondary sheave 72 becomes relatively large. Accordingly, a contact area S2 between the secondary sheave 72 and the V-belt 73 also becomes relatively large. Meanwhile, if the engine speed is low, the driving force transmitted from the V-belt 73 to the secondary sheave 72 becomes relatively small. Thus, the contact pressure of the sheave surface of the secondary sheave 72 becomes relatively small.

On the other hand, as shown in FIG. 10(b), if the engine speed is high, the speed reduction ratio becomes small and the winding radius r2 of the V-belt 73 in the secondary sheave 72 becomes relatively small. Accordingly, the contact area S2 between the secondary sheave 72 and the V-belt 73 also becomes relatively small. Meanwhile, if the engine speed is high, the driving force transmitted from the V-belt 73 to the secondary sheave 72 becomes relatively large. Thus, if the engine speed is high, the contact pressure of the sheave surface of the secondary sheave 72 becomes relatively large.

That is, in the primary sheave, the contact pressure does not become so large even though the engine speed varies. To the contrary, it is conceivable that, in the secondary sheave, the contact pressure becomes very large under the condition that the engine speed is large (i.e., at the so-called top speed). From such analyses, the inventors realize that it is important to prevent wear of the belt in the secondary sheave at the top speed.

Also, the inventors realize the following facts as different points between the primary sheave and the secondary sheave. That is, because the primary sheave transmits the driving force from the engine to the V-belt, the primary sheave is likely to be affected by fluctuations of the engine speed. To the contrary, the driving force from the engine is transmitted to the secondary sheave via the V-belt. Therefore, the secondary sheave is hardly affected by the fluctuations of the engine speed in comparison with the primary sheave.

From such analyses, the inventors realize that both of prevention of wear of the belt and prevention of wear of the sheaves are highly compatibly ensured by making the surface hardness of the secondary sheave less than the surface hardness of the primary sheave. The inventors, thus, concluded the following;

That is, the belt type continuously variable transmission according to the present teaching includes a primary sheave to which the driving force from an engine is transmitted, a secondary sheave, and a V-belt wound around the primary sheave and the secondary sheave, the V-belt having a contact part contacting with the primary sheave and the secondary sheave, and at least a portion of the contact part being made of resin. The surface hardness of the contact part of the secondary sheave contacting with the V-belt is lower than the surface hardness of a contact part of the primary sheave contacting with the V-belt.

According to the above belt type continuously variable transmission, the surface hardness of the contact portion of the secondary sheave is relatively low. Even though the belt type continuously variable transmission is at the top speed where the contact pressure becomes large, the V-belt in the secondary sheave can be prevented from wearing. Meanwhile, because the secondary sheave is hardly affected by the fluctuations, the secondary sheave does not remarkably wear in comparison with the primary sheave even the surface hardness of the secondary sheave is relatively low. Accordingly, both of the prevention of the wear of the V-belt and the prevention of the wear of the sheaves can be highly compatibly ensured.

### Effect of the Teaching:

As thus discussed, according to the present teaching, in the belt type continuously variable transmission, both of the prevention of the wear of the V-belt and the prevention of the wear of the sheaves can be highly compatibly ensured.

The description above further discloses, in order to highly compatibly ensure both of prevention of wear of a V-belt and prevention of wear of sheaves, a belt type continuously variable transmission 30 which includes a primary sheave 71 to which driving force from an engine 29 is transmitted, a secondary sheave 72, and a V-belt 73 wound around the primary sheave 71 and the secondary sheave 72 and formed with a resin block belt. A sheave surface of the primary sheave 71 is plated with chrome. The secondary sheave 72 is made of stainless steel and a sheave surface thereof is not plated with chrome. The sheave surface hardness of the secondary sheave 72 is lower than the sheave surface hardness of the primary sheave 71.

The description above further discloses, as a preferred first aspect, a belt type continuously variable transmission comprising: a primary sheave to which a driving force from an engine is transmitted; a secondary sheave; and a V-belt wound around the primary sheave and the secondary sheave, the V-belt having a contact part contacting with the primary sheave and the secondary sheave, and at least a portion of the contact part being made of resin, wherein a surface hardness of a contact part of the secondary sheave contacting with the V-belt is lower than a surface hardness of a contact part of the primary sheave contacting with the V-belt.

Further, according to a preferred second aspect, each of the primary sheave and the secondary sheave includes a sheave body made of a predetermined material; at least a surface of a contact part of the sheave body of the primary sheave contacting with the V-belt is coated with a plating material having a hardness higher than a hardness of the sheave body; and a surface of a contact part of the sheave body of the secondary sheave contacting with the V-belt is not coated with the plating material.

Further, according to a preferred third aspect, the plating material is a plating material containing chrome as at least a part thereof.

Further, according to a preferred fourth aspect, the material of the sheave body of the primary sheave is aluminum or an alloy containing aluminum.

Further, according to a preferred fifth aspect, material of the sheave body of the primary sheave is aluminum or an alloy containing aluminum, and material of the sheave body of the secondary sheave is stainless steel.

Further, according to a preferred sixth aspect, material of the sheave body of the secondary sheave is stainless steel.

Further, according to a preferred seventh aspect, the surface hardness of the contact part of the secondary sheave is equal to or greater than 100Hv.

Further, according to a preferred eighth aspect, a distance in which the V-belt moves in a radial direction of the secondary sheave while a condition under which a speed reduction ratio is the maximum value varies to another condition under which the speed reduction ratio is the minimum value is shorter than a distance in which the V-belt moves in a radial direction of the primary sheave.

Further, according to a preferred ninth aspect, a distance between an axis of the primary sheave and an axis of the secondary sheave is double or less than double the diameter of the secondary sheave.

Further, according to a preferred tenth aspect, at least the contact part of the secondary sheave is machined by turning.

Further, according to a preferred eleventh aspect, at least the contact portion of the secondary sheave has a spiral groove or a plurality of coaxial circular grooves.

Further, according to a preferred twelfth aspect, a pitch between neighboring grooves is equal to or smaller less than 0.1 mm.

Further, according to a preferred thirteenth aspect, a straddle type vehicle comprising the belt type continuously variable transmission is provided according to the first preferred aspect.

Further, according to a preferred fourteenth aspect, the straddle type vehicle comprises: a front wheel and a rear wheel, wherein both of the primary sheave and the secondary sheave are disposed between an axis of the front wheel and an axis of the rear wheel in a fore to aft direction of the vehicle.

## Claims

1. Belt type continuously variable transmission (30) comprising:
a primary sheave (71) to which a driving force from an engine is transmitted;
a secondary sheave (72); and
a V-belt (73) wound around the primary sheave (71) and the secondary sheave (72), the V-belt (73) having a contact part contacting with the primary sheave (71) and the secondary sheave (72), and at least a portion of the contact part being made of resin,
**characterized in that**
a surface hardness of a contact part of the sheave halves (72a, 72b) of the secondary sheave (72) contacting with the V-belt (73) is lower than a surface hardness of a contact part of the primary sheave (71) contacting with the V-belt (73).

2. Belt type continuously variable transmission according to claim 1, wherein each of the primary sheave (71) and the secondary sheave (72) includes a sheave body made of a predetermined material;
at least a surface of a contact part of the sheave body (71a,71b) of the primary sheave (71) contacting with the V-belt (73) is coated with a plating material having a hardness higher than a hardness of its sheave body (71a,71b); and
a surface of a contact part of the sheave body (72a,72b) of the secondary sheave (72) contacting with the V-belt (73) is not coated with the plating material.

3. Belt type continuously variable transmission according to claim 2, wherein the plating material for the primary sheave (71) is a plating material containing chrome as at least a part thereof.

4. Belt type continuously variable transmission according to claim 3, wherein the material of the sheave body (71a,71b) of the primary sheave (71) is aluminum or an alloy containing aluminum.

5. Belt type continuously variable transmission according to one of the claims 1 to 4, wherein material of the sheave body (72a,72b) of the secondary sheave (72) is stainless steel.

6. Belt type continuously variable transmission according to one of the claims 1 to 5, wherein the surface hardness of the contact part of the secondary sheave (72) is equal to or greater than 100Hv, in particular approximately 400 Hv.

7. Belt type continuously variable transmission according to one of the claim 1 to 6, wherein the surface hardness of the contact part of the primary sheave (71) is approximately 1,000Hv.

8. Belt type continuously variable transmission according to one of the claims 1 to 7, wherein a distance in which the V-belt (73) moves in a radial direction of the secondary sheave (72) in a first condition of the transmission, under which a speed reduction ratio is the maximum value, varies to a second condition of the transmission, under which the speed reduction ratio is the minimum value, is shorter than a distance in which the V-belt (73) moves in a radial direction of the primary sheave (71).

9. Belt type continuously variable transmission according to one of the claims 1 to 8, wherein a distance (L) between an axis of the primary sheave (71) and an axis of the secondary sheave (72) is not more than double the diameter (D2) of the secondary sheave (72).

10. Belt type continuously variable transmission according to one of the claims 1 to 9, wherein irregularities for retaining wear powder are formed into at least those parts of the sheave surfaces in contact with the V-belt (73).

11. Belt type continuously variable transmission according to claim 10, wherein at least the contact part of the secondary sheave (72) is machined by turning.

12. Belt type continuously variable transmission according to claim 10 or 11, wherein at least the contact part of the secondary sheave (72) has a spiral groove or a plurality of coaxial circular grooves.

13. Belt type continuously variable transmission according to one of the claims 1 to 12, wherein a pitch between neighboring grooves is equal to or smaller than 0.1 mm.

14. Straddle type vehicle comprising the belt type continuously variable transmission according to one of the claims 1 to 13.

15. Straddle type vehicle according to claim 14, further comprising:
a front wheel and a rear wheel,
wherein both of the primary sheave and the secondary sheave are disposed between an axis of the front wheel and an axis of the rear wheel in a fore to aft direction of the vehicle.

## Patentansprüche

1. Ein mit einem Riemen versehenes stufenloses Getriebe (30), aufweisend: eine erste Laufrolle (71), zu der eine Antriebskraft eines Motors übertragen wird, eine zweite Laufrolle (72), und einen Keilriemen, der um die erste und zweite Laufrolle (71, 72) herumgewickelt ist, wobei der Keilriemen (72) einen Kontaktbereich hat, der in Kontakt mit der ersten und zweiten Laufrolle (71, 72) steht, und wobei wenigstens ein Teil des Kontaktbereichs aus Harz gefertigt ist, **dadurch gekennzeichnet, dass** eine Oberflächenhärte des Kontaktbereichs der Laufrollenhälften (72a, 72b) der zweiten Laufrolle (72), die in Kontakt mit dem Keilriemen (73) stehen, kleiner als eine Oberflächenhärte eine Kontaktbereichs der ersten Laufrolle (71), die mit dem Keilriemen in Kontakt steht, ist.

2. Ein mit einem Riemen versehenes stufenloses Getriebe (30) nach Anspruch 1, wobei die erste und zweite Laufrolle (71, 72) jeweils einen Laufrollenkörper aufweisen, der aus einem bestimmten Material gefertigt ist, wobei wenigstens eine Oberfläche eines Kontaktbereichs des Laufrollenkörpers (71 a, 71 b) der ersten Laufrolle (71) die in Kontakt mit dem Keilriemen (73) steht, mit einem Plattierungsmaterial beschichtet ist, das eine höhere Härte als die Härte des Laufrollenkörpers (71 a, 71 b) aufweist, und wobei eine Oberfläche eines Kontaktbereiches des Laufrollenkörpers (72a, 72b) der zweiten Laufrolle (72), die in Kontakt mit dem Keilriemen (73) steht, nicht mit einem Plattierungsmaterial beschichtet ist.

3. Ein mit einem Riemen versehenes stufenloses Getriebe (30) nach Anspruch 2, wobei das Plattierungsmaterial der ersten Laufrolle (71) ein Plattierungsmaterial ist, das wenigstens als ein Teil Chrom aufweist.

4. Ein mit einem Riemen versehenes stufenloses Getriebe (30) nach Anspruch 3, wobei das Material des Laufrollenkörpers (71a, 71b) der ersten Laufrolle Aluminium oder eine Legierung, die Aluminium enthält, ist.

5. Ein mit einem Riemen versehenes stufenloses Getriebe (30) nach einem der Ansprüche 1 bis 4, wobei das Material des Laufrollenkörpers (72b, 72b) der zweiten Laufrolle (72) rostfreier Stahl ist.

6. Ein mit einem Riemen versehenes stufenloses Getriebe (30) nach einem der Ansprüche 1 bis 5, wobei ein die Oberflächenhärte des Kontaktbereichs der zweiten Laufrolle (72) gleich oder größer als 100Hv, vorzugsweise ungefähr 400Hv, ist.

7. Ein mit einem Riemen versehenes stufenloses Getriebe (30) nach einem der Ansprüche 1 bis 6, wobei die Oberflächenhärte des Kontaktbereichs der ersten Laufrolle (71) ungefähr 1000Hv ist.

8. Ein mit einem Riemen versehenes stufenloses Getriebe (30) nach einem der Ansprüche 1 bis 7, wobei ein Abstand, in dem der Keilriemen (73) in einer radialen Richtung der zweiten Laufrolle (72) sich gemäß einer ersten Stellung des Getriebes bewegt, nach der das Geschwindigkeitsreduktionsverhältnis einen größeren Wert aufweist, sich zu einer zweiten Stellung des Getriebes verändert, nach der das Geschwindigkeitsreduktionsverhältnis den geringsten Wert aufweist, kleiner ist als ein Abstand, in dem der Keilriemen (73) in einer radialen Richtung der ersten Laufrolle (71) sich bewegt.

9. Ein mit einem Riemen versehenes stufenloses Getriebe (30) nach einem der Ansprüche 1 bis 8, wobei ein Abstand (L) zwischen einer Achse der ersten Laufrolle (71) und einer Achse der zweiten Laufrolle (72) nicht mehr als das Doppelte des Durchmessers (D2) der zweiten Laufrolle (72) ist.

10. Ein mit einem Riemen versehenes stufenloses Getriebe (30) nach einem der Ansprüche 1 bis 9, wobei Unebenheiten, zur Aufnahme eines Abriebpulvers, wenigstens in den Bereichen der Laufrollenoberflächen ausgebildet sind, die in Kontakt mit dem Keilriemen (73) stehen.

11. Ein mit einem Riemen versehenes stufenloses Getriebe (30) nach Anspruch 10, wobei wenigstens der Kontaktbereich der zweiten Laufrolle (72) durch Drehen bearbeitet wird.

12. Ein mit einem Riemen versehenes stufenloses Getriebe (30) nach Ansprüchen 10 oder 11, wobei wenigstens der Kontaktbereich der zweiten Laufrolle (72) eine spiralförmige Rille oder eine Vielzahl koaxial rundumlaufender Rillen aufweist.

13. Ein mit einem Riemen versehenes stufenloses Getriebe (30) nach einem der Ansprüche 1 bis 12, wobei ein Abstand zwischen zwei benachbarten Rillen gleich oder kleiner als 0,1 mm ist.

14. Grätschsitzfahrzeug, das mit einem Riemen versehenes stufenloses Getriebe nach einem der Ansprüche 1 bis 13 aufweist.

15. Grätschsitzfahrzeug nach Anspruch 14, das weiterhin aufweist:
ein Vorderrad und ein Hinterrad,
wobei die erste Laufrolle (71) und die zweite Laufrolle (72) jeweils zwischen einer Achse des Vorderrades und einer Achse des Hinterrades in einer Längssicht des Fahrzeugs gesehen angeordnet sind.

## Revendications

1. Transmission variable en continu (30) de type à courroie comprenant :
une poulie primaire (71) à laquelle une force d'entraînement en provenance d'un moteur est transmise ;
une poulie secondaire (72) ; et
une courroie en V (73) enroulée autour de la poulie primaire (71) et de la poulie secondaire (72), la courroie en V (73) comportant une partie de contact entrant en contact avec la poulie primaire (71) et la poulie secondaire (72), et au moins une portion de la partie de contact étant faite de résine,
**caractérisée en ce que**
une dureté de surface d'une partie de contact des moitiés de poulie (72a, 72b) de la poulie secondaire (72) en contact avec la courroie en V (73) est inférieure à une dureté de surface d'une partie de contact de la poulie primaire (71) en contact avec la courroie en V (73).

2. Transmission variable en continu de type à courroie selon la revendication 1, dans laquelle chacune de la poulie primaire (71) et de la poulie secondaire (72) comprend un corps de poulie fait d'une matière prédéterminée ;
au moins une surface d'une partie de contact du corps de poulie (71a, 71b) de la poulie primaire (71) en contact avec la courroie en V (73) est revêtue d'une matière de placage présentant une dureté supérieure à une dureté de son corps de poulie (71a, 71b) ; et
une surface d'une partie de contact du corps de poulie (72a, 72b) de la poulie secondaire (72) en contact avec la courroie en V (73) n'est pas revêtue de la matière de placage.

3. Transmission variable en continu de type à courroie selon la revendication 2, dans laquelle la matière de placage pour la poulie primaire (71) est une matière de placage contenant du chrome formant au moins une partie de celle-ci.

4. Transmission variable en continu de type à courroie selon la revendication 3, dans laquelle la matière du corps de poulie (71a, 71b) de la poulie primaire (71) est de l'aluminium ou un alliage contenant de l'aluminium.

5. Transmission variable en continu de type à courroie selon l'une des revendications 1 à 4, dans laquelle la matière du corps de poulie (72a, 72b) de la poulie secondaire (72) est de l'acier inoxydable.

6. Transmission variable en continu de type à courroie selon l'une des revendications 1 à 5, dans laquelle la dureté de surface de la partie de contact de la poulie secondaire (72) est égale ou supérieure à 100 Hv, en particulier environ 400 Hv.

7. Transmission variable en continu de type à courroie selon l'une des revendications 1 à 6, dans laquelle la dureté de surface de la partie de contact de la poulie primaire (71) est approximativement de 1 000 Hv.

8. Transmission variable en continu de type à courroie selon l'une des revendications 1 à 7, dans laquelle une distance de laquelle la courroie en V (73) se déplace dans une direction radiale de la poulie secondaire (72) dans un premier état de la transmission, dans lequel un rapport de réduction de vitesse est la valeur maximale, varie jusqu'à un second état de la transmission, dans lequel le rapport de réduction de vitesse est la valeur minimale, est plus courte qu'une distance de laquelle la courroie en V (73) se déplace dans une direction radiale de la poulie primaire (71).

9. Transmission variable en continu de type à courroie selon l'une des revendications 1 à 8, dans laquelle une distance (L) entre un axe de la poulie primaire (71) et un axe de la poulie secondaire (72) n'est pas supérieure au double du diamètre (D2) de la poulie secondaire (72).

10. Transmission variable en continu de type à courroie selon l'une des revendications 1 à 9, dans laquelle des irrégularités pour conserver une poudre d'usure sont formées au moins dans les parties des surfaces de poulie en contact avec la courroie en V (73).

11. Transmission variable en continu de type à courroie selon la revendication 10, dans laquelle au moins la partie de contact de la poulie secondaire (72) est usinée par tournage.

12. Transmission variable en continu de type à courroie selon la revendication 10 ou 11, dans laquelle au moins la partie de contact de la poulie secondaire (72) comporte une rainure en spirale ou plusieurs rainures circulaires coaxiales.

13. Transmission variable en continu de type à courroie selon l'une des revendications 1 à 12, dans laquelle un pas entre des rainures voisines est inférieur ou égal à 0,1 mm.

14. Véhicule de type à enfourcher comprenant la transmission variable en continu de type à courroie selon l'une des revendications 1 à 13.

15. Véhicule de type à enfourcher selon la revendication 14, comprenant en outre :
une roue avant et une roue arrière,
dans lequel tant la poulie primaire que la poulie secondaire sont disposées entre un axe de la roue avant et un axe de la roue arrière dans un sens de l'avant à l'arrière du véhicule.
